# EUROPEAN PATENT SPECIFICATION

(11) **EP 3 862 247 B1**
(45) Date of publication and mention of the grant of the patent: **05.07.2023**
(21) Application number: 20460024.1
(22) Date of filing: 22.05.2020
(51) Int. Cl.: B62B 9/10

(54) **STROLLER SEAT WITH A BACKREST FOLDING MECHANISM**
KINDERWAGENSITZ MIT KLAPPMECHANISMUS EINER RÜCKENLEHNE
SIÈGE DE POUSSETTE AVEC MÉCANISME DE PLIAGE DU DOSSIER

(30) Priority: 10.02.2020 PL 43287320
(43) Date of publication of application: 11.08.2021
(73) Proprietor: Przedsiebiorstwo Produkcyjno - Handlowe "ARO" KARON Spolka Jawna, 42-200 Czestochowa (PL)
(72) Inventor: Karon, Janusz, 42-200 Czestochowa (PL)
(74) Representative: Korbela, Anna

(56) References cited:
- WO-A1-2010/019779
- US-A- 6 086 087

## Description

The subject of the invention is a stroller seat comprising a folding mechanism suitable for a stroller seat backrest intended for use, in particular, in various types of stroller seats with an adjustable backrest, also in seats with the additional option of disassembly and in seats positioned in different directions, i.e. when the child can look at the person guiding the stroller or can look in the direction in which the stroller is guided.

There are several solutions known for adjusting the backrest of a stroller seat. There are also known solutions consisting in simple adjustment of the carrycot back, in which in its rear part, i.e. in the back part of the carrycot in which the baby's head is placed (or in the back of the mattress), there is an element mounted or made, e.g. in the form of tabs or hooks. They make it possible to hook and lock the element supporting the backrest in the appropriate position and, as a result, raise the entire carrycot backrest or at least the mattress placed on it to the right height.

From the description of the US application US5590896A (filed for protection on 09.09.1994) there is a solution known as a "Stroller". A three-wheeled collapsible stroller which can be used on terrain that is more bumpy or uneven than the smooth terrain suitable for a conventional small-wheeled stroller, but that is also more maneuverable than a conventional three-wheeled "jogging stroller." The stroller has a folding frame and automatic side latches so that it is conveniently collapsible into a compact form for transportation and storage. The described stroller also has a seat backrest that is quickly and conveniently adjustable between reclined and upright seating positions and that remains in the same reclined or upright position when folded and unfolded. The brakes of the rear wheels are automatically set when the stroller is fully folded.

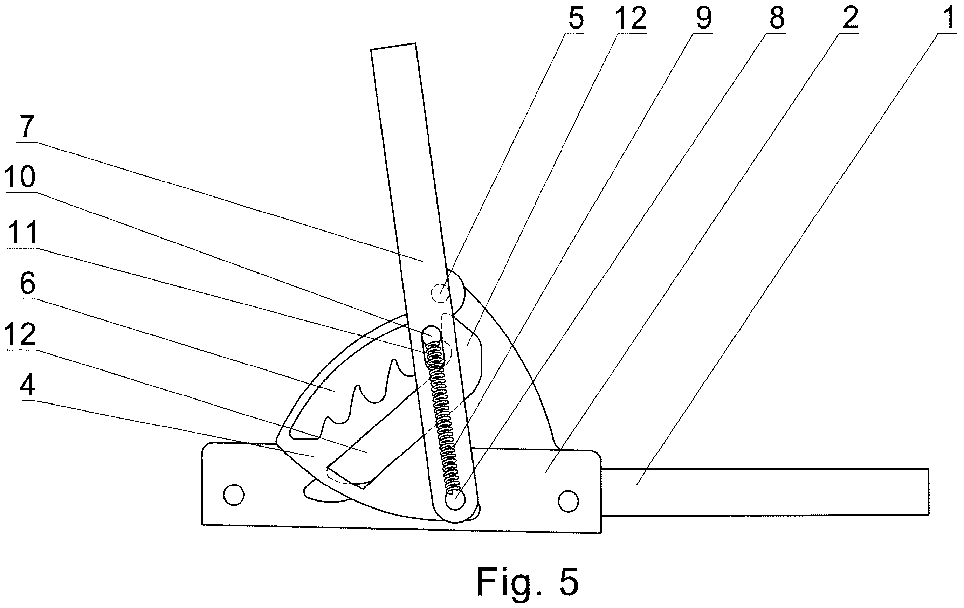

Whereas, from the description of the British invention GB2491713A (filed for protection on 09.06.2011) there is a solution known is as "A folding stroller". The stroller includes a handle 10, a plurality of front legs 20, a chassis 30, a plurality of wheels 40, a seat plate 60, a seat frame 50, a first link 70 and a second link 80. An upper end of each front leg is pivoted to a lower end of the handle, and the chassis is pivoted to a lower end of each front leg. The seat frame is pivoted between the plurality of front legs for supporting the seat plate. The first link is pivoted between the handle and the seat frame, and the second link is pivoted among the seat frame, the chassis and the one of plurality of front legs in a foldable manner. Whereas, the foldable second link may comprise a two-part linkage 810, 820 which is caused to fold when the handle of the stroller is folded forwards to collapse the stroller. The first and second links may have separate pivot points (see figure 5) on the seat plate and seat frame, so that the seat plate and seat frame separate as the stroller is folded to its collapsed position.

From the description of the US application US6086087A (priority: 10.11.1999) there is a solution known as a "Multi-seat stroller". The multi-seat stroller includes a stroller frame having a front wheel-carrying portion, a rear wheel-carrying portion spaced apart from the front wheel-carrying portion in a longitudinal direction and mounted with a rear footrest member, and a seat-mounting portion extending in the longitudinal direction between the front and rear wheel-carrying portions. Each of a non-detachable seat member and a detachable seat member has a backrest portion and a horizontal seat portion provided with a retaining unit for mounting pivotally the backrest portion on the seat portion such that the backrest portion can be selectively disposed in one of a folded state, where the backrest portion overlies the seat portion, and an extended state, where the backrest portion extends vertically from the seat portion. The seat portion of the non-detachable seat member is mounted fixedly on the seat-mounting portion of the stroller frame, whereas the seat portion of the detachable seat member is movably disposed on the seat-mounting portion so as to be spaced apart from the non-detachable seat member in the longitudinal direction. A seat-locking unit is provided on the seat-mounting portion of the stroller frame for retaining removably the seat portion of the detachable seat member on the seat-mounting portion.

There is also known the application WO2010/019779A1 (priority: 15.08.2008) titled "Stroller". The stroller having a frame with front and rear portions and right and left sides. A seat having a seat base and a seat back is mounted to the front portion of the frame. The seat back is rotatable relative to the frame between a back support position and a travel seat support position where the seat back is substantially parallel to and above the seat base when the stroller is in an operating position.

The aim of the invention is to develop a mechanism constructed with the use of simple technical means and light and small elements that will allow a fuller range of movement of the backrest of the stroller relative to the seat and closer folding of the backrest which, and as a result, will allow more convenient transport of the dismantled stroller seat.

This aim is achieved by a stroller seat as defined in claim 1. Preferred embodiments are defined in the dependent claims.

An essential part of the developed stroller seat comprising a folding mechanism for the stroller seat backrest is the seat plate with known positioners placed on its sides - for adjusting the position of the backrest - with wavelike projections and recesses. Whereas, on both sides of the backrest there is a locking element introduced into each positioner, which on both sides of the backrest frame goes with its ends through longitudinal openings that were made in the backrest frame, and the locking element at each of its ends is connected to a spring, which is preferably mounted and led out at or near the attachment point.

The essence of this solution lies in the fact that the seat plate - on each of both sides in a place close to the rear line of where the seat and backrest are connected - has a handle located in the part of the seat plate in which the stroller seat backrest is placed. Whereas, at the bottom of the handle, there is an element formed - along the edge of the seat plate - which is generally rectangular and substantially parallel to the seat plate. From that element there is another element led out upwards which has a shape similar to a triangle. Whereas, the handle in its central part has a recess, which is adapted in such a way that a pendulum-mounted movable comb with a shape similar to a triangle with rounded corners can recess in it, and therefore the recess with its shape corresponds to the shape of the movable comb.

The pendulum connection of the handle with the movable comb is the connecting point and this location is the axis of rotation of the movable comb.

Also, the connecting point - i.e. the place where the handle is connected to the movable comb - is located in one of the corners of the movable comb. And at the same time in the upper corner of the handle element with a similar shape to the triangle, along one of the edges of the movable comb, a recess or opening is made with wavelike projections and recesses, where the so shaped recess forms a positioner.

In this lower corner of the movable comb that retracts in the recess deepest - the movable ridge has a mounting point at which it is pendulum connected to the backrest frame. Whereas, the attachment point is the pivot point of the backrest frame relative to the plate of the seat.

The movable comb has a sliding lock of folding with a suitably profiled end of the sliding lock of the movable comb.

The sliding lock is hidden in the contour of the movable comb in which the sliding lock is recessed. The end of the unlocked sliding lock - with a spring mechanism - is adapted to lock the movable comb in the handle, and adapted to release the sliding lock enabling the swinging movement of the movable comb relative to the connecting point.

Whereas, in the folding mechanism, the connecting point defining the place where the backrest frame is folded is located above the attachment point at which the backrest angle is adjusted.

An analogous backrest folding mechanism is mounted on the side, on each of both sides the stroller.

Preferably, in the stroller seat comprising the folding mechanism for the stroller seat backrest, the handle - on each of both sides, in a place close to the rear line connecting the seat with the backrest - is inseparably attached to or profiled in the seat plate.

Usually, the attachment points located on both sides of the seat backrest, i.e. on both sides of the stroller - are connected to each other with an element running through the entire width of the seat backrest.

Most often the stroller seat comprising the folding mechanism for the stroller seat backrest has an additional folding mechanism suitable for the stroller backrest frame.

The advantage of the developed folding mechanism for the stroller seat backrest is the fact that due to the location of the folding backrest frame above the adjustment point of its backrest angle - it is possible to retract the backrest frame base backwards, and thus is possible to shorten the length of the folded seat and provide a more parallel arrangement of the backrest relative to the seat after its folding.

At the same time, the folded elements do not adhere to each other after folding, they are slightly moved away from each other, but they are arranged almost parallel to each other. Owing to this, it became possible to create the additional space between the backrest frame and the seat plate.

In the place obtained in this way - at the moment the backrest of the stroller seat is folded - it is possible to contain other upholstery elements, e.g. a canopy attached to the sides of the seat plate, or a non-removable mattress, and thus the elements in the developed invention do not interfere with the folding of the backrest seat.

The possibility of using the developed folding mechanism for the stroller seat backrest and the adjustment of the backrest do not depend on the structure of the stroller or on the direction in which the seat is positioned.

The invention is intended for use in various types of stroller seats with adjustable backrest, also in seats with an additional disassembly option enabling the seat to be attached in such a way that it faces rearwards or forwards.

The subject of the invention, i.e. the folding mechanism for the stroller seat backrest a with a comb adjustment of the backrest angle, is presented in more detail as shown in the drawings, in which:

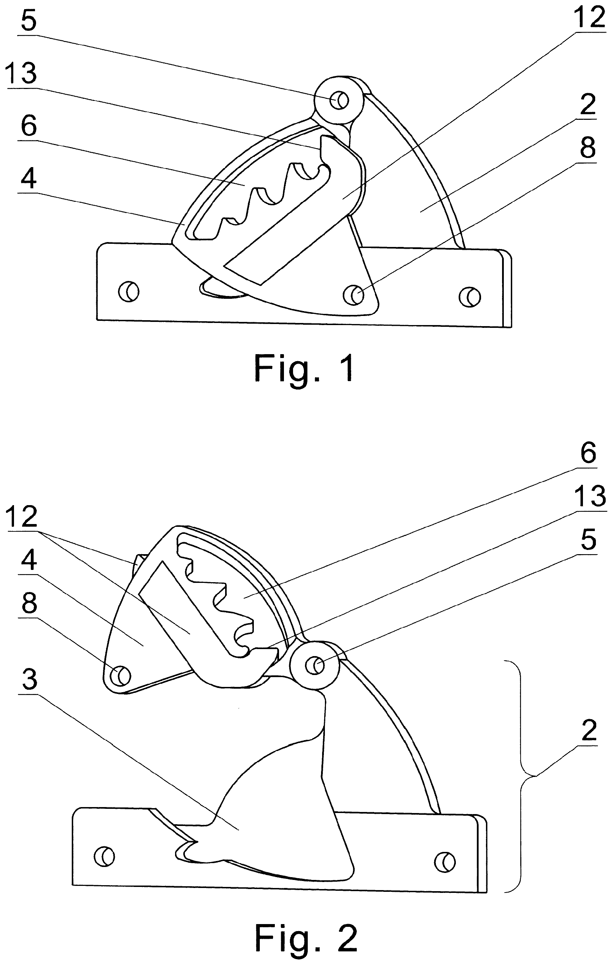

fig.1 - shows (in the side view) the folding mechanism for the stroller seat backrest when the stroller is unfolded,
fig. 2 - shows (in the side view) the folding mechanism for the stroller seat backrest while folding the stroller backrest,
fig. 3 - shows (in the side view) the folding mechanism for the stroller seat backrest with the visible seat plate and the backrest frame where the backrest is tilted at a smaller angle and adjusted to the position of the lying child,
fig. 4 - shows (in the side view) the folding mechanism for the stroller seat backrest with the visible seat plate and the backrest frame where the backrest is tilted at a larger angle and adjusted to the position of the sitting child,
fig. 5 - shows (in the side view) the folding mechanism for the stroller seat backrest with the visible top of the seat and the backrest frame while releasing the stroller folding backrest lock,
fig. 6 - shows (in side view) the developed folding mechanism for the stroller seat backrest after folding the backrest of the stroller seat with the visible seat plate and the backrest frame, while
fig. 7 - shows a perspective view of the back of the stroller backrest with an example of a locking element and seat backrest folding mechanisms which are installed on both sides of the stroller.

The developed folding mechanism for the stroller seat backrest is used in strollers of known design, in which the main part is plate 1 of the seat and thus seat plate 1 (lined with soft materials) is where a child is placed or seated.

An analogous folding mechanism for the stroller seat backrest is mounted on the side, on each of both sides of the seat. The described below, individual components of the mechanism are connected to one another and work identically on both sides of the stroller.

Seat plate 1 - on each of both sides in a place close to the rear line connecting the seat with the backrest - has handle 2. Each of the handles 2 is inseparably attached to seat plate 1, or both handles 2 are profiled in it.

Both handles 2 are attached in that part of seat plate 1 in which the upper body part of the child is laid.

The lower part of handle 2 has a generally rectangular element (in the side view), which is parallel to seat plate 1 and is located (or shaped) along the edge of seat plate 1.

An element with a shape similar to a triangle (in the side view) is led out upwards from this element.

Handle 2 has recess 3 in its central part, in which the pendulum movable comb 4 sinks. To make this possible - recess 3 in shape corresponds to the shape of movable comb 4. Movable comb 4 has a shape similar to a triangle with rounded corners (in the side view).

The pendulum connection of handle 2 with movable comb 4 makes connecting point 5 and this location is the axis of rotation of movable comb 4.

The shape of movable comb 4 can be determined as above as an element with a shape similar to a triangle (in the side view). At the same time, its shape can be also described as close to the shape of a circle segment with a central angle in the range of 50° to 90° with rounded corners.

Connecting point 5 - i.e. the connection point of handle 2 with movable comb 4 - is located in one of the corners of movable comb 4 and at the same time in the upper corner of handle 2 element with a shape similar to a triangle (in the side view).

Thus, handle 2 has an opening in its upper part through which pendulum movable comb 4 is connected to handle 2 by means of a screw or rivet.

Handle 2 can be connected to movable comb 4 in a different known way, however, always so as to allow the swinging movement of these two elements with respect to each other.

Along one of the edges of movable comb 4 (for example being an arc) a recess is made (an opening can also be made here) with wavelike projections and recesses.

The recess thus shaped forms so-called positioner 6. Wavelike projections and recesses constitute the recesses of movable comb 4, i.e. positioner 6. The recesses located in this place will be used at the appropriate time to determine the position and angle of inclination of the folded backrest of the stroller.

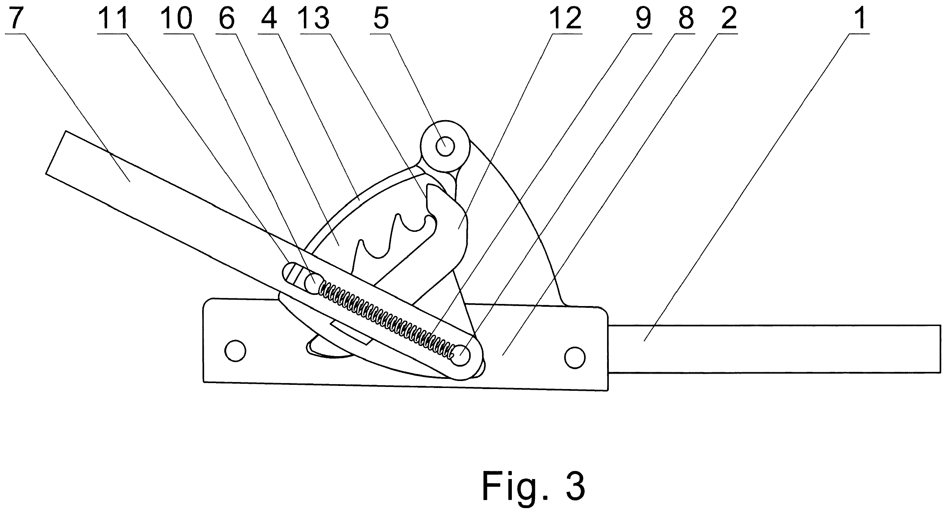

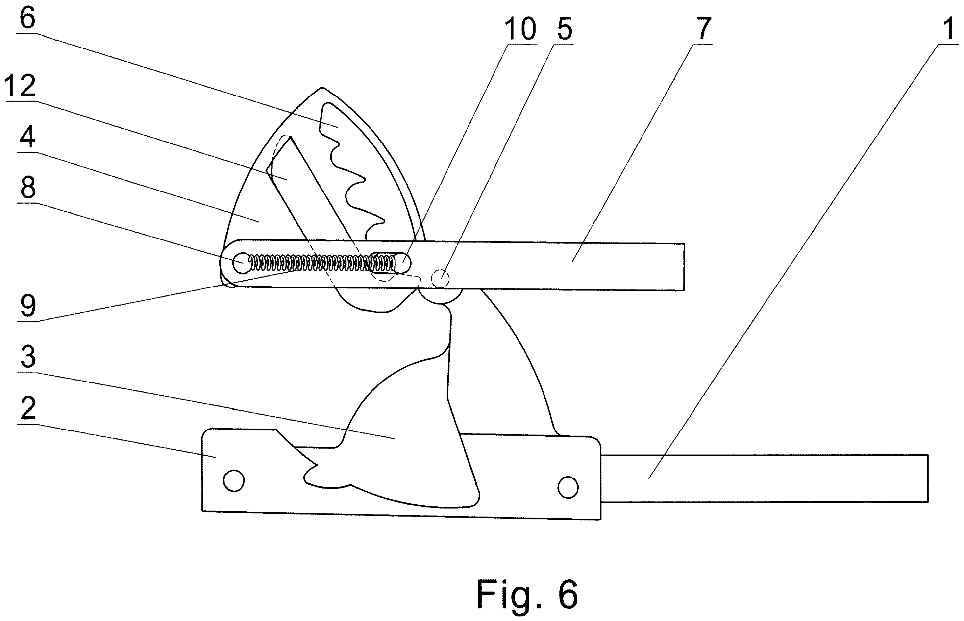

In this bottom corner of movable comb 4, which retracts deepest in recess 3, movable comb 4 has an opening through which it is pendulously connected to backrest frame 7 by means of a screw or rivet (Fig. 3, Fig. 4, Fig. 5 and Fig. 6). This opening constitutes attachment point 8. Movable comb 4 can be connected to backrest frame 7 also in a different known way enabling the swinging movement of the two elements relative to each other.

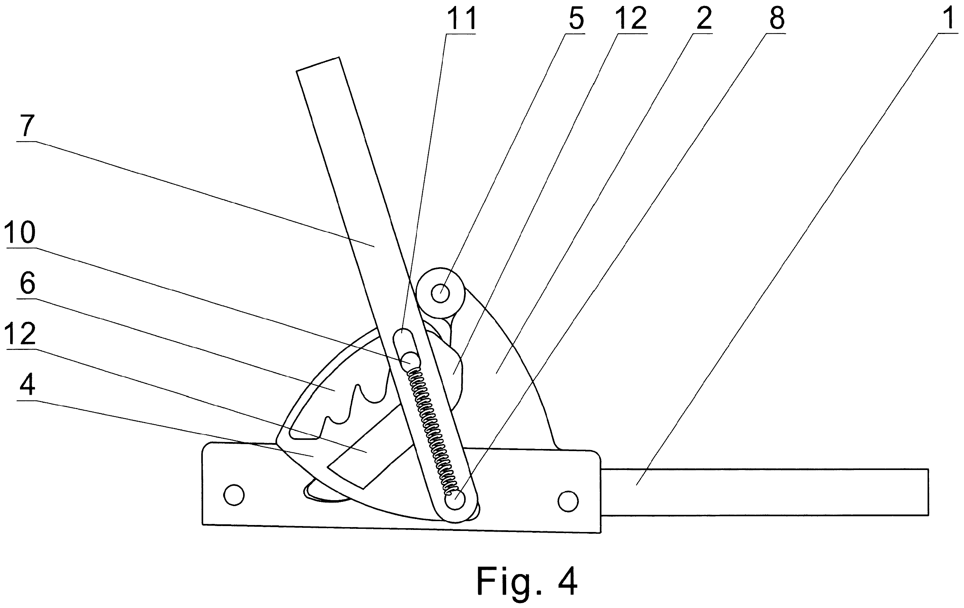

Selected further positions of the backrest are shown in the drawings. Thus, the flattest position of the backrest is shown in Fig. 3. In the position when the backrest of the stroller is more raised and adapted to the child's sitting position is shown in Fig. 4.

Attachment point 8 is the place of rotation of backrest frame 7 relative to seat plate 1 when changing the angle of the stroller seat backrest.

Attachment points 8 are located on both sides of the seat backrest i.e. on both sides of the stroller, and they can be connected to each other by means of an element running through the entire width of the seat backrest.

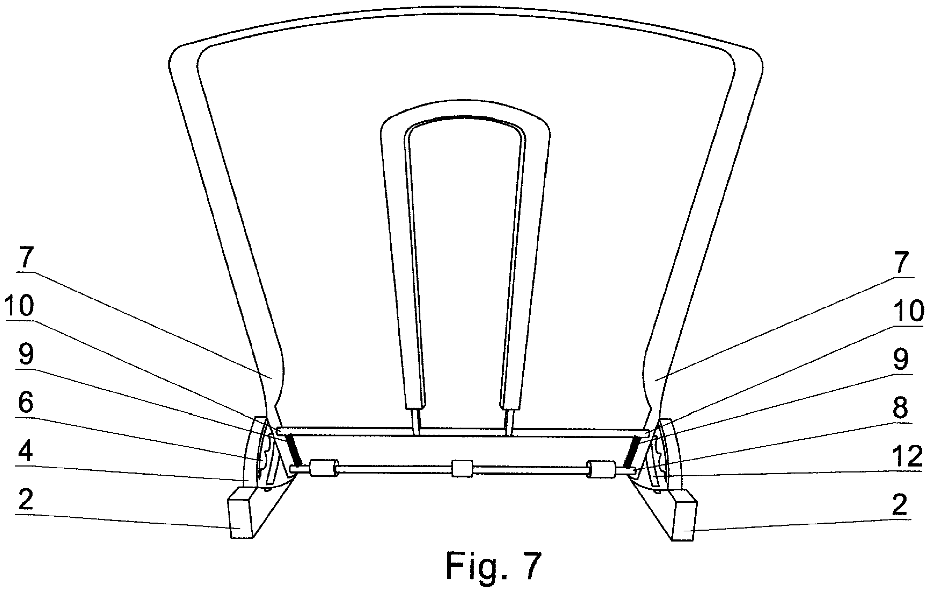

Backrest frame 7 has a position lock that consists of at least one spring 9 (usually two springs 9 arranged on both sides of backrest frame 7) and locking element 10, which can be, for example, the same steel rod, which runs through the entire width of the backrest, e.g. for example, which is bent at the top into a shape resembling the inverted letter "U", which can easily be pulled upwards at this point and thus will easily overcome the resistance of attached to the bottom spring 9 (or springs 9) holding (keeping) locking element 10 in the selected recess of positioner 6 (Fig. 7).

Locking element 10 will simultaneously lock (or unlock) the inclined position of the seat backrest of the stroller, usually on both sides of the seat.

Locking element 10 is inserted with its ends on both sides the backrest frame 7 to longitudinal openings 11 which were made in backrest frame 7. Locking element 10 at each of its ends is connected to spring 9, which is mounted and led out preferably at or around attachment point 8.

Locking of the backrest position of the stroller allows backrest frame 7 to be locked in positioner 6 at the angle selected by the user, relative to the top of seat plate 1.

When locking element 10 is in the selected recess of positioner 6 - spring 9 is in the neutral position and the protrusions of positioner 6 adjacent to the selected recess block locking element 10. Thus, they block backrest frame 7 at a given angle of inclination. Locking element 10 is then in the lower part of longitudinal opening 11, and the space in the upper part of longitudinal opening 11 is not used.

As explained above, locking of backrest frame 7 in the lowest recess of positioner 6 is adapted to the position of a lying child, while locking of backrest frame 7 in the subsequent recesses of positioner 6 allows backrest frame 7 to be adjusted to the sitting positions with different inclinations.

When the user wants to change the angle of the backrest inclination to a larger one (from lying to sitting) they push backrest frame 7 forward, i.e. towards seat plate 1.

Then locking element 10 slides in the same direction as seat frame 7 along the wavelike projections and recesses. Or more precisely it moves in the direction in which its movement is possible until it falls to the corresponding recess of positioner 6 (movement in the opposite direction is more difficult and slightly blocked by the appropriately profiled walls of positioner 6 projection).

Spring 9 extends when locking element 10 is pulled and pulled out from positioner 6 recess and slid onto the projection.

When sliding locking element 10 "bypasses" the projection, the spring tends to return to its neutral position and triggers locking element 10 so that it falls into the next recess of positioner 6 and locks in it.

In turn, when a user wants to change the angle of the backrest inclination to a smaller one (e.g. from sitting to lying), it is necessary to manually move locking element 10 (pulling locking element 10, which can preferably be done by other elements).

Locking element 10 is then moved by known methods to the upper part of the longitudinal opening 11 of backrest frame 7, spring 9 is tensioned, and then spring 9 is released only after reaching the assumed position and after setting the inclination.

To fold backrest frame 7 of the stroller, it is necessary to release sliding lock 12. The release of sliding lock 12 of movable comb 4 can be done by means of a mechanism for changing the position of backrest frame 7 or by means of a separate mechanism.

The release of sliding lock 12 of movable comb 4 by means of the changing mechanism for backrest frame 7 occurs when the user moves locking element 10 to the end of positioner 6, i.e. near connecting point 5.

Locking element 10 presses on suitably shaped end 13 of sliding lock 12, which is part of sliding lock 12 which then retracts.

End 13 of sliding lock 12 has a shape adjusted to the shape of locking element 10, so that when the elements are pressed, they do not slide off each other, and preferably so that the pressure force is spread over a slightly larger surface and so that this force does not act on the point at end 13 of sliding lock 12.

More specifically, sliding lock 12 moves in the direction of movement of locking element 10 and somehow hides in a contour of movable comb 4, wherein sliding lock 12 is recessed.

In this way, the end of sliding lock 12, which protruded beyond the contour of movable comb 4 and blocked movable comb 4 in handle 2, releases movable comb 4 and allows movable comb 4 to swing pivotally relative to connecting point 5.

After releasing sliding lock 12 of movable comb 4, the user has the option of folding backrest frame 7 forward. Sliding lock 12 has a spring mechanism that allows sliding lock 12 to slide and retract in movable comb 4, and then, when locking movable comb 4 in handle 2, it allows sliding lock 12 to extend beyond the contour of movable comb 4.

in the developed folding mechanism for the stroller seat backrest, connecting point 5 defining the folding place of backrest frame 7 is located above attachment point 8 at which the angle of the backrest inclination is adjusted.

This arrangement of both points makes it possible to retract the base of backrest frame 7 backwards, and thus to shorten the length of the folded seat and additionally after folding the backrest, a space is created between backrest frame 7 and seat plate 1. In the space obtained in this way it is possible to contain other upholstery elements, for example a canopy attached to the sides of seat plate 1.

The mechanism has a place of rotation of backrest frame 7 (position change), i.e. connecting point 5, which does not affect the basic changes of the position of backrest frame 7. Changes in the position of backrest frame 7 relative to seat plate 1 are made at attachment point 8.

### List of elements:

- 1: - plate (of the seat),
- 2: - handle,
- 3: - recess,
- 4: - (movable) comb,
- 5: - connecting point,
- 6: - positioner,
- 7: - frame (of the backrest),
- 8: - point (of the attachment),
- 9: - spring,
- 10: - locking element,
- 11: - longitudinal opening,
- 12: - lock (sliding),
- 13: - end (of sliding lock 12).

## Claims

1. A stroller seat comprising a folding mechanism for a stroller seat backrest, the stroller seat comprising the backrest and a seat plate with positioners placed on its sides - to adjust the position of the backrest - with wavelike projections and recesses, where on each side of the backrest into each positioner a locking element is inserted, which on both sides of a backrest frame passes with its ends through longitudinal openings (11) in the backrest frame, where the locking element at each its end is connected to a spring, which is mounted and led out preferably at or near an attachment point,
wherein the seat plate (1) - on each of both sides in a place close to the rear line connecting the seat plate (1) with the backrest - has a handle (2) located in this part of the seat plate (1) in which the stroller seat backrest is placed, where in the lower part of the handle (2) - along the edge of the seat plate (1) - a generally rectangular element is formed, which is substantially parallel to the seat plate (1) and from this rectangular element an element with a shape similar to a triangle is led out upwards where the handle (2) in its central part has a recess (3) adapted to recess in it a pendulum-mounted movable comb (4) with a shape similar to a triangle with rounded corners, and therefore the recess (3) with its shape corresponds to the shape of the movable comb (4), a place of pendulum connection of the handle (2) with the movable comb (4) is a connecting point (5) and this place is the axis of rotation of the movable comb (4), at the same time the connecting point (5) - i.e. the place where the handle (2) connects with the movable comb (4) - is located in one of the corners of the movable comb (4) and at the same time in the upper corner of the handle (2) with a shape similar to a triangle, along one of the edges of the movable comb (4) a recess or opening is made with wavelike protrusions and recesses, where thus formed recess forms the positioner (5), wherein in the lower corner of the movable comb (4), which hides deepest in the recess (3) the movable comb (4) has the attachment point (8) in which it is pendulum connected to the backrest frame (7), and the attachment point (8) is the place of rotation of the backrest frame (7) relative to the seat plate (1), the movable comb (4) has a sliding lock (12) of folding with an appropriately profiled end (13) of the sliding lock (12) of the movable comb (4), the sliding lock (12) is hidden in the contour of the movable comb (4), in which the sliding lock (12) is recessed, the end of the unlocked sliding lock (12) - with a spring mechanism - adapted to lock the movable comb (4) in the handle (2), and adapted to release the sliding lock (12) allows pendulum rotation of the movable comb (4) relative to the connecting point (5), wherein in the folding mechanism, the connecting point (5) defining a folding place of the backrest frame (7) is located above the attachment point (8), where the backrest inclination angle is adjusted, and an analogous backrest folding mechanism is attached to each of both sides of the stroller.

2. The stroller seat according to claim 1, **characterized in that** the handle (2) - on each of both sides in a place similar to the rear line connecting the seat plate (1) with the backrest - is inseparably attached to or profiled in the seat plate (1).

3. The stroller seat according to claim 1, **characterized in that** the attachment points (8) located on both sides of the seat backrest, i.e. on both sides of the stroller, are connected to each other by an element running through the entire width of the seat backrest.

4. The stroller seat according to claim 1, **characterized in that** it has an additional folding mechanism suitable for the stroller backrest frame (7).

## Patentansprüche

1. Der Kinderwagensitz mit einem Klappmechanismus für die Rückenlehne des Kinderwagensitzes, der eine Rückenlehne und eine Sitzplatte mit seitlich angeordneten Reglern - zur Einstellung der Rückenlehne - mit wellenförmig geformten Vorsprüngen und Vertiefungen aufweist, wobei in jeden Regler auf beiden Seiten der Rückenlehne ein Verriegelungselement eingeführt wird, das auf beiden Seiten des Rahmens der Rückenlehne mit seinen Enden durch die Längsöffnungen (11) des Rahmen für Rückenlehne hindurchgeht, wobei das Verriegelungselement an jedem Ende mit einer Feder verbunden ist, die vorzugsweise an oder nahe dem Verankerungspunkt angebracht und ausgeführt ist,
**wobei** die Sitzplatte (1) - auf jeder der beiden Seiten, an einer nahe der hinteren Verbindungslinie zwischen der Sitzplatte (1) und der Rückenlehne liegenden Stelle - einen Haltegriff (2) aufweist, der sich in dem Teil der Sitzplatte (1) befindet, auf dem die Rückenlehne des Kinderwagens ruht, wobei in dem unteren Teil des Haltegriffs (2) - entlang der Kante der Sitzplatte (1) - ein grundsätzlich rechteckiges Element ausgebildet ist, das im Prinzip parallel zur Sitzplatte (1) ist und von diesem rechteckigen Element ein einem Dreieck ähnliches Element nach oben abgeleitet wird, wobei der Haltegriff (2) in seinem zentralen Teil eine Vertiefung (3) aufweist, die für das Eingreifen eines befestigten schwenkbaren Kamms (4) geeignet ist, der einem Dreieck mit abgerundeten Ecken ähnelt, und deswegen entspricht die Vertiefung (3) der Form eines beweglichen Kamms (4), die Schwenkverbindung des Haltegriffs (2) mit dem beweglichen Kamm (4) ist der Verbindungspunkt (5), der die Drehachse des beweglichen Kamms (4) bildet,
gleichzeitig
ist der Verbindungspunkt (5) - d. h. die Verbindungsstelle des Haltegriffs (2) mit dem beweglichen Kamm (4) - in einer der Ecken des beweglichen Kamms (4) platziert und gleichzeitig in der oberen Ecke des einem Dreieck ähnlichen Haltegriffs (2) entlang einer der Kanten des beweglichen Kamms (4) ist eine Vertiefung oder ein Loch mit wellenförmig geformten Vorsprüngen und Vertiefungen ausgebildet und die so geformte Vertiefung bildet einen Regler (6), wobei
in der unteren Ecke des beweglichen Kamms (4), die sich am tiefsten in der Vertiefung (3) befindet, hat der bewegliche Kamm (4) einen Verankerungspunkt (8), an dem er schwenkbar mit dem Rahmen (7) der Rückenlehne verbunden ist, und
der Verankerungspunkt (8) ist die Drehstelle des Rahmens (7) der Rückenlehne gegenüber der Sitzplatte (1),
der bewegliche Kamm (4) hat eine Schiebeverriegelung (12) mit einem entsprechend profilierten Ende (13) der Schiebeverriegelung (12) des beweglichen Kamms (4), die Schiebeverriegelung (12) ist in der Umrisslinie des beweglichen Kamms (4) versteckt, in dem die Schiebeverriegelung (12) vertieft ist,
das Ende der Schiebeverriegelung (12) - mit Federmechanismus - die für die Verriegelung des beweglichen Kamms (4) im Haltegriff (2) und für die Freigabe der Schiebeverriegelung (12) geeignet ist, ermöglicht eine Pendeldrehung des beweglichen Kamms (4) um den Verbindungspunkt (5),
wobei
bei dem entwickelten Klappmechanismus ist der Verbindungspunkt (5), an dem der - Rahmen (7) der Rückenlehne geklappt wird, oberhalb des Verankerungspunkts (8) angeordnet, an dem der Rückenlehnenwinkel eingestellt wird, und
der entsprechende Klappmechanismus ist sowohl auf der einen als auch auf der anderen Seite des Kinderwagens angebracht.

2. Der Kinderwagensitz nach Absatz 1, **dadurch gekennzeichnet, dass** der Haltegriff (2) - auf jeder der beiden Seiten, an einer nahe der hinteren Verbindungslinie zwischen der Sitzplatte (1) und der Rückenlehne gelegenen Stelle - untrennbar angebracht oder in der Sitzplatte (1) profiliert ist.

3. Der Kinderwagensitz nach Absatz 1, **dadurch gekennzeichnet, dass** die Verankerungspunkte (8) auf beiden Seiten der Rückenlehne der Sitzplatte, d. h. auf beiden Seiten des Kindersportwagens, durch ein über die gesamte Breite der Rückenlehne geführtes Element miteinander verbunden sind.

4. Der Kinderwagensitz nach Absatz 1, **dadurch gekennzeichnet, dass** er einen zusätzlichen Klappmechanismus für den Rahmen (7) der Rückenlehne des Kinderwagens aufweist.

## Revendications

1. Un siège de poussette pour enfants comprenant un mécanisme de pliage du dossier du siège de poussette pour enfants, ledit siège comprenant un dossier et une assise de siège avec des positionneurs placés de part et d'autre du siège - pour ajuster l'angle d'inclinaison du dossier - avec des saillies et des évidements en forme de crémaillère, tandis que, de part et d'autre du dossier, un élément de verrouillage est inséré dans chaque positionneur, lequel élément de verrouillage passe par ses extrémités dans des orifices longitudinaux (11) de chaque côté de l'armature du dossier, tandis que l'élément de verrouillage, à chacune de ses extrémités, est relié à un ressort qui est fixé et tiré de manière appropriée au point de fixation ou à proximité de celui-ci,
tandis que l'assise (1) du siège - sur chacun de ses côtés dans une position proche de la ligne arrière de la connexion entre l'assise (1) du siège et le dossier - possède un support (2) situé dans la partie de l'assise (1) du siège sur laquelle s'articule le dossier du siège de poussette, tandis que la partie inférieure du support (2) est formée - le long du bord de l'assise (1) du siège - d'un élément généralement rectangulaire, en principe parallèle à l'assise (1) du siège et, de cet élément rectangulaire s'élève un élément de forme approximativement triangulaire vers le haut, le support (2) ayant dans sa partie centrale un renfoncement (3) adapté pour recevoir la crémaillère mobile (4) consistant en une forme approximativement triangulaire, présentant des angles arrondis, montée sur pendule, et, par conséquent, la forme du renfoncement (3) correspond en creux à la forme de la crémaillère mobile (4),
le lieu de connexion pendulaire où le support (2) est reliée à la crémaillère mobile (4) est le point de jonction (5) et ce lieu correspond à l'axe de rotation de la crémaillère mobile (4),
en même temps,
le point de jonction (5) - c'est-à-dire le lieu de connexion entre le support (2) et la crémaillère mobile (4) - est situé dans l'un des angles de la crémaillère mobile (4) et, en même temps, dans l'angle supérieur du support (2) qui présente la forme approximative d'un triangle,
le long de l'un des bords de la crémaillère mobile (4) a été usiné un évidement ou une ouverture avec des saillies et des renfoncements en forme de crémaillère, le renfoncement ainsi formé formant le positionneur (6), de sorte que dans l'angle inférieur de la crémaillère mobile (4) qui se rétracte le plus profondément dans le renfoncement (3), la crémaillère mobile (4) présente un point (8) de fixation par lequel elle est reliée de manière pendulaire à l'armature (7) du dossier, tandis que le point (8) de fixation est le point de rotation de l'armature (7) du dossier par rapport à l'assise (1) du siège,
la crémaillère mobile (4) possède un verrou coulissant (12) du pliage, avec une extrémité profilée (13) de manière appropriée de ce verrou coulissant (12) de la crémaillère mobile (4),
le verrou coulissant (12) est dissimulé dans le contour de la crémaillère mobile (4), dans lequel le verrou coulissant (12) est encastré,
l'extrémité du verrou coulissant (12) du pliage - avec mécanisme à ressort - adapté pour verrouiller la crémaillère mobile (4) dans le support (2) et adapté pour relâcher le verrou coulissant (12) permet à la crémaillère mobile (4) de pivoter par rapport au point de jonction (5),
tandis que
dans le mécanisme de pliage ainsi conçu, le point de jonction (5) qui définit l'endroit du pliage de l'armature (7) du dossier est placé au-dessus du point (8) de fixation, où l'angle d'inclinaison du dossier peut être réglé, et
un mécanisme de pliage analogue pour le dossier est installé de manière identique d'un côté et de l'autre de la poussette.

2. Un siège de poussette selon la revendication 1, **caractérisé en ce que** le support (2) - sur chacun des deux côtés en un point proche de la ligne de jonction arrière entre l'assise du siège (1) et le dossier - est fixée de manière inséparable ou est moulée dans l'assise du siège (1),

3. Un siège de poussette selon la revendication 1, **caractérisé en ce que** les points (8) de fixation situés de part et d'autre du dossier, c'est-à-dire de part et d'autre de la poussette, sont reliés entre eux par un élément parcourant toute la largeur du dossier.

4. Un siège de poussette selon la revendication 1, **caractérisé en ce qu'**il comporte un mécanisme de pliage supplémentaire destiné à l'armature (7) du dossier de la poussette.
